# EUROPEAN PATENT APPLICATION

(11) **EP 4 510 256 A1**
(43) Date of publication of application: **19.02.2025**
(21) Application number: 22964732.6
(22) Date of filing: 08.11.2022
(51) Int. Cl.: H01M 10/04, H01M 10/0525

(54) **BATTERY CELL, BATTERY, AND ELECTRICAL APPARATUS**

(71) Applicant: Contemporary Amperex Technology Co., Limited, Ningde, Fujian 352100 (CN)
(72) Inventor: ZHOU, Wenlin, Ningde, Fujian 352100 (CN); WU, Ningsheng, Ningde, Fujian 352100 (CN); CHEN, Long, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/130664
(87) International publication number: WO 2024/098257

(57) **Abstract**

The present application relates to the technical field of batteries, and provides a battery cell, a battery, and an electrical apparatus. The battery cell comprises a housing, an end cover, an electrode assembly, and poles. The housing comprises a bottom wall and a side wall which are integrally formed; in a first direction, the bottom wall is disposed at one end of the side wall, and an opening is formed in the other end of the side wall; and the end cover covers the opening. The electrode assembly is accommodated in the housing, and the bottom wall is configured to support the electrode assembly in the first direction. The poles are disposed on the bottom wall, and the poles are electrically connected to the electrode assembly. On the one hand, the battery cell having such a structure can alleviate the phenomenon that when a busbar component of the battery pulls the poles, a force is transmitted to the housing and the end cover by means of the poles, thereby reducing the risk of connection failure between the end cover and the housing, and on the other hand, the poles and the end cover are respectively located at two ends of the battery cell in the first direction, and the end cover is located at the top of the battery cell, such that the phenomenon of liquid leakage of the battery cell due to connection failure between the end cover and the housing or deformation of the end cover and the housing can be alleviated.

## Description

### TECHNICAL FIELD

This application relates to the field of battery technologies and specifically to a battery cell, a battery, and an electric apparatus.

### BACKGROUND

In recent years, new energy vehicles have seen explosive growth. In the field of electric vehicles, traction batteries serve as an irreplaceable and crucial power source. With the vigorous promotion of new energy vehicles, the demand for traction battery products has been increasing. Batteries, as core components of new energy vehicles, have high requirements in terms of use safety and lifespan. Battery cells are typically assembled from positive and negative electrode plates and a separator through winding or lamination to form an electrode assembly (jelly roll), which is then placed into a housing, covered with an end cover, and finally filled with electrolyte. However, in the prior art, battery cells often experience electrolyte leakage or short circuits during use, leading to a short lifespan and significant use safety hazards.

### SUMMARY

Embodiments of this application provide a battery cell, a battery, and an electric apparatus, so as to effectively improve the lifespan and use safety of the battery cell.

According to a first aspect, an embodiment of this application provides a battery cell including a housing, an end cover, an electrode assembly, and a pole. The housing includes integrally formed bottom wall and side wall, where the side wall surrounds the bottom wall, and in a first direction, the bottom wall is disposed at one end of the side wall, and the other end of the side wall forms an opening. The end cover covers the opening, and the end cover is disposed opposite the bottom wall in the first direction. The electrode assembly is accommodated in the housing, where in the first direction, the bottom wall is configured to support the electrode assembly. The pole is disposed on the bottom wall and is electrically connected to the electrode assembly.

In the above technical solution, the pole of the battery cell is disposed on the bottom wall of the housing, which is opposite the end cover in the first direction. The bottom wall and the side wall are of an integral structure, and the bottom wall supports the electrode assembly, that is, the battery cell is disposed in an inverted manner, making the bottom wall of the battery cell with the pole face downward and the end cover of the electrode assembly face upward. The battery cell of such structure can alleviate the phenomenon of the force being transferred to the housing and the end cover through the pole when a busbar of the battery exerts a pulling or twisting force on the pole, thereby mitigating the situation where the end cover and the housing are pulled apart. This effectively reduces the risk of connection failure between the end cover and the housing, enhancing the use safety and lifespan of the battery cell. In addition, since the pole and the end cover are positioned at two ends of the battery cell in the first direction, respectively, with the end cover at the top of the battery cell, this can alleviate the phenomenon of electrolyte leakage in the battery cell when the end cover and the housing experience connection failure or deform, thereby enhancing the use safety of the battery cell.

In some embodiments, the electrode assembly includes a body portion and a tab protruding from the body portion, where the tab is electrically connected to the pole. The battery cell further includes a support member, where in the first direction, at least a portion of the support member is disposed between the bottom wall and the body portion, and the bottom wall supports the body portion via the support member.

In the above technical solution, the battery cell is provided with the support member disposed between the bottom wall of the housing and the body portion of the electrode assembly in the first direction, allowing the bottom wall to support the body portion of the electrode assembly via the support member. The battery cell of such structure can increase a force-bearing area of the body portion of the electrode assembly, thereby helping to alleviate the phenomenon of too large local stress in the body portion of the electrode assembly due to localized force. This can effectively reduce the risk of damage to the body portion of the electrode assembly during use, thereby improving the lifespan of the electrode assembly.

In some embodiments, in the first direction, the tab protrudes from an end of the body portion facing the bottom wall, and the tab is bent around the support member.

In the above technical solution, the tab is connected to the end of the body portion facing the bottom wall in the first direction, and the tab is bent around the support member and then electrically connected to the pole, so that a part of the tab connected to the pole is located on a side of the support member facing away from the body portion. This can effectively alleviate the phenomenon where the tab is inserted backward into the body portion of the electrode assembly during assembly or use, thereby helping to reduce the risk of short circuits in the battery cell and enhancing the use safety of the battery cell.

In some embodiments, the tab includes a first connection segment, a second connection segment, and a third connection segment connected in sequence. The first connection segment is connected to the body portion, and the third connection segment is connected to the pole. In the first direction, the first connection segment is located on a side of the support member facing the body portion, and the third connection segment is located on a side of the support member facing the bottom wall. In a second direction, the second connection segment is located at one end of the support member, the second direction being perpendicular to the first direction.

In the above technical solution, the tab has the first connection segment, the second connection segment, and the third connection segment connected in sequence, with the first and third connection segments located on two sides of the support member, respectively, and the second connection segment located at an end of the support member in the second direction. The first and third connection segments are respectively connected to the body portion and the pole, achieving a structure where the tab is bent around the support member. This allows the tab to form the third connection segment that is located on the side of the support member facing the bottom wall in the first direction and that is configured to be connected to the pole.

In some embodiments, the battery cell includes two electrode assemblies. In a second direction, body portions of the two electrode assemblies are stacked in the second direction, and tabs of the two electrode assemblies are bent around two ends of the support member, respectively, the second direction being perpendicular to the first direction.

In the above technical solution, the battery cell is provided with two electrode assemblies stacked in the second direction, and the tabs of the two electrode assemblies are bent around the two ends of the support member in the second direction, respectively. This achieves a structure where the tabs of the two electrode assemblies are both bent around the support member and then are connected to the pole. This can alleviate the phenomenon where the tabs of the two electrode assemblies are inserted backward into the body portion of the electrode assembly during assembly or use, thereby helping to further reduce the safety hazards of the battery cell during use.

In some embodiments, the battery cell further includes a current collecting member. In the first direction, at least a portion of the current collecting member is disposed between the support member and the bottom wall, and the current collecting member connects the tab and the pole.

In the above technical solution, the battery cell is further provided with the current collecting member disposed between the support member and the bottom wall in the first direction, allowing the current collecting member to connect the tab and the pole, achieving an electrical connection between the tab and the pole. Such structure is beneficial for reducing the difficulty of connecting the tab and the pole, to improve the production efficiency of the battery cell.

In some embodiments, the battery cell further includes a first insulating member. In the first direction, at least a portion of the first insulating member is disposed between the current collecting member and the bottom wall, to insulate and isolate the current collecting member from the bottom wall.

In the above technical solution, the battery cell is further provided with the first insulating member disposed between the current collecting member and the bottom wall in the first direction. The first insulating member can insulate and isolate the current collecting member from the bottom wall, reducing the risk of a short circuit between the current collecting member and the bottom wall. This helps to enhance the safety of the battery cell during use, reducing the risk associated with the use of the battery cell.

In some embodiments, in the first direction, the bottom wall has a first surface facing away from the electrode assembly, where the first surface is provided with a groove, a bottom wall of the groove forms a pressure relief portion, and the pressure relief portion is configured to release internal pressure of the battery cell.

In the above technical solution, the groove recessed toward the interior of the battery cell is provided on the first surface of the bottom wall, and the pressure relief portion configured to release the internal pressure of the battery cell is formed on the bottom wall of the groove, so as to release the internal pressure of the battery cell during thermal runaway of the battery cell. Such structure allows the pressure relief portion to be spaced apart from the first surface of the bottom wall and closer to the electrode assembly compared to the first surface. This can provide a certain level of protection to the pressure relief portion, reducing the risk of the pressure relief portion being worn or damaged by external environments, thereby reducing the phenomenon of premature valve opening of the pressure relief portion. In addition, it can alleviate the phenomenon where the pressure relief pressure required by the pressure relief portion increases due to the pressure relief portion being covered by other components, to ensure the normal use of the pressure relief portion, thereby helping to reduce the safety hazards of the battery cell during use.

In some embodiments, in the first direction, a distance between the pressure relief portion and the first surface is H, satisfying 1 mm ≤ H ≤ 5 mm.

In the above technical solution, the distance between the pressure relief portion and the first surface in the first direction is set to be between 1 mm and 5 mm. This can alleviate the phenomenon of poor protection of the pressure relief portion and easy coverage by other components caused by an excessively small distance between the pressure relief portion and the first surface, ensuring the normal use of the pressure relief portion. In addition, this can alleviate the phenomenon of excessive space occupation and increased difficulty in processing caused by an excessively large distance between the pressure relief portion and the first surface.

In some embodiments, in the first direction, the bottom wall has a second surface facing the electrode assembly, where the bottom wall forms a protrusion at a position corresponding to the groove, and the protrusion protrudes from the second surface.

In the above technical solution, the protrusion protruding from the second surface is formed at a position of the bottom wall corresponding to the groove, so that the pressure relief portion protrudes from the second surface toward the electrode assembly. Such structure facilitates the processing of the groove on the bottom wall that is recessed toward the electrode assembly. In addition, it can enhance the structural strength between the pressure relief portion and the bottom wall.

In some embodiments, the groove includes a first groove and a second groove disposed continuously in the first direction, where the first groove is disposed on the first surface, and a side surface of the first groove is connected to a side surface of the second groove via a bottom surface of the first groove.

In the above technical solution, the groove is provided with the first groove and the second groove disposed continuously in the first direction toward the electrode assembly, with the side surface of the first groove connected to the side surface of the second groove via the bottom surface of the first groove. This means the second groove is disposed on the bottom surface of the first groove, creating a stepped structure between the pressure relief portion and the bottom wall. This is beneficial for further enhancing the structural strength between the pressure relief portion and the bottom wall.

In some embodiments, an outer peripheral surface of the protrusion is disposed at an obtuse angle with respect to the second surface, and in the first direction, the protrusion has a third surface facing the electrode assembly, a projection of an edge of the third surface in the first direction being located within the bottom surface of the first groove.

In the above technical solution, the outer peripheral surface of the protrusion is disposed at an obtuse angle with respect to the second surface and the projection of the edge of the third surface of the protrusion facing the electrode assembly in the first direction is located within the bottom surface of the first groove, so that the distance between the outer peripheral surface of the protrusion and the bottom surface of the first groove in the first direction gradually decreases from the edge of the third surface to the second surface, resulting in the thickness of the protrusion gradually decreasing in the first direction. Therefore, a region with strong strength and regions where the strength gradually decreases are formed on the protrusion. This achieves a structure where a region of the pressure relief portion connected to the bottom wall transitions from strong to weak in strength, allowing the region with decreased strength to absorb the stress and energy transferred from the bottom wall while ensuring the structural strength of the pressure relief portion connected to the bottom wall, to reduce the impact of the stress and energy of the bottom wall on the pressure relief portion. This, in turn, reduces the risk of deformation of the pressure relief portion during use due to the influence of the bottom wall.

In some embodiments, a bottom wall of the second groove forms the pressure relief portion.

In the above technical solution, the bottom wall of the second groove is disposed as the pressure relief portion to release the internal pressure of the battery cell, that is, the groove is simplified to only include the first groove and the second groove. Such structure facilitates the processing of the bottom wall, reducing the difficulty in processing.

In some embodiments, the first surface is provided with a protruding blocking portion, the blocking portion surrounding an outer side of the groove.

In the above technical solution, the blocking portion is provided protruding from the first surface and surrounding the outer side of the groove, that is, the blocking portion is an annular structure surrounding the outer side of the groove. The battery cell of such structure can block the electrolyte through the blocking portion during assembly of the battery cell, to reduce the phenomenon of the electrolyte flowing into the groove from the first surface, thereby reducing the impact of the electrolyte on the pressure relief portion.

In some embodiments, thickness of the bottom wall is greater than thickness of the side wall.

In the above technical solution, the thickness of the bottom wall is set to be greater than the thickness of the side wall, so as to enhance the structural strength of the bottom wall, thereby ensuring the structural stability of the pole mounted on the bottom wall and improving the load-bearing capacity of the bottom wall for the electrode assembly, to alleviate the phenomenon of deformation of the bottom wall during use.

In some embodiments, thickness of the bottom wall is equal to thickness of the side wall.

In the above technical solution, with the thickness of the bottom wall set to be equal to the thickness of the side wall, the integral structure of the bottom wall and side wall can be directly formed through processes such as stamping, without the need for additional processing techniques. This is beneficial for reducing the manufacturing difficulty of the housing.

In some embodiments, thickness of the side wall is greater than thickness of the end cover.

In the above technical solution, setting the thickness of the side wall to be greater than the thickness of the end cover is beneficial for reducing the space occupied by the end cover since the end cover does not have components such as poles mounted on it, thereby increasing the energy density and capacity of the battery cell.

In some embodiments, the battery cell includes two poles with opposite polarities, the two poles being both disposed on the bottom wall, and the two poles being both electrically connected to the electrode assembly.

In the above technical solution, the battery cell is provided with the two poles, and the two poles are both disposed on the bottom wall of the housing. This can reduce the phenomenon of the force being transferred to the housing and the end cover through the poles when the busbar of the battery exerts a pulling or twisting force on the two poles with opposite polarities, thereby mitigating the situation where the end cover and the housing are pulled apart, further reducing the risk of connection failure between the end cover and the housing. In addition, this can further alleviate the phenomenon of electrolyte leakage in the battery cell when the end cover and the housing experience connection failure or deform.

According to a second aspect, an embodiment of this application further provides a battery including a box and the foregoing battery cell. The battery cell is accommodated in the box, and in the first direction, the bottom wall is disposed facing the bottom of the box.

In some embodiments, in the first direction, the end cover is connected to the top of the box, so that the battery cell is suspended in the box.

In the above technical solution, the end cover of the battery cell is disposed facing the top of the box, the bottom wall of the housing is disposed facing the bottom of the box, and the end cover of the battery cell is connected to the top of the box, so that the battery cell is suspended within the box. Such structure allows the bottom wall with the pole to be spaced apart from the bottom of the box, facilitating the mounting of the busbar and other components connected to the pole within the box. In addition, this reduces the impact of other components on the end cover, reducing the phenomenon of deformation of the end cover leading to connection failure between the end cover and the housing, thereby helping to reduce the risk of electrolyte leakage in the battery cell.

According to a third aspect, an embodiment of this application further provides an electric apparatus including the foregoing battery.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a cross-sectional view of a battery according to some embodiments of this application;
FIG. 3 is a schematic structural diagram of a battery cell according to some embodiments of this application;
FIG. 4 is a structural exploded view of a battery cell according to some embodiments of this application;
FIG. 5 is a cross-sectional view of a battery cell according to some embodiments of this application;
FIG. 6 is a locally enlarged view of position A of the battery cell shown in FIG. 5;
FIG. 7 is a schematic structural diagram of a housing of a battery cell according to some embodiments of this application;
FIG. 8 is a locally enlarged view of position B of the housing shown in FIG. 7;
FIG. 9 is a cross-sectional view of a housing of a battery cell according to some embodiments of this application; and
FIG. 10 is a locally enlarged view of position C of the housing shown in FIG. 9.

Reference signs: 1000. vehicle; 100. battery; 10. box; 11. first box body; 12. second box body; 20. battery cell; 21. housing; 211. bottom wall; 2111. lead-out hole; 2112. first surface; 2113. second surface; 2114. blocking portion; 212. side wall; 213. opening; 214. accommodation cavity; 215. groove; 2151. first groove; 2151a. bottom surface of first groove; 2152. second groove; 216. pressure relief portion; 2161. notch groove; 217. protrusion; 2171. outer peripheral surface of protrusion; 2172. third surface; 22. end cover; 23. electrode assembly; 231. body portion; 232. tab; 2321. first connection segment; 2322. second connection segment; 2323. third connection segment; 24. pole; 25. support member; 251. through hole; 26. current collecting member; 27. first insulating member; 200. controller; 300. motor; X. first direction; and Y. second direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery generally includes a box for enclosing one or more battery cells or a plurality of battery modules. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active material layer, with the positive electrode active material layer applied on the surface of the positive electrode current collector. A part of the positive electrode current collector uncoated with the positive electrode active material layer serves as the positive electrode tab, facilitating the input or output of electrical energy of the positive electrode plate via the positive electrode tab. For instance, in a lithium-ion battery, the positive electrode current collector may be made of aluminum, and the positive electrode active material may be lithium cobaltate, lithium iron phosphate, ternary lithium, lithium manganate, or the like. The negative electrode plate includes a negative electrode current collector and a negative electrode active material layer, with the negative electrode active material layer applied on the surface of the negative electrode current collector. A part of the negative electrode current collector uncoated with the negative electrode active material layer serves as the negative electrode tab, facilitating the input or output of electrical energy of the negative electrode plate via the negative electrode tab. The negative electrode current collector may be made of copper, and the negative electrode active material may be carbon, silicon, or the like. To allow a large current to pass through without any fusing, multiple positive electrode tabs are provided and stacked together, and multiple negative electrode tabs are provided and stacked together.

The separator may be made of polypropylene (polypropylene, PP), polyethylene (polyethylene, PE), or the like. Additionally, the electrode assembly may be a winding structure or a laminated structure, but the embodiments of this application are not limited thereto.

Batteries offer significant advantages such as high energy density, minimal environmental pollution, high power density, long lifespan, wide applicability, and low self-discharge rate, making them an essential component of today's new energy development. Battery cells typically are assembled from positive and negative electrode plates and a separator through winding or lamination to form an electrode assembly (jelly roll), which is then placed into a housing, covered with an end cover, and finally filled with electrolyte. However, as battery technology continues to evolve, higher demands are placed on the safety performance and lifespan of batteries.

For a typical battery cell, the end cover of the battery cell usually covers the opening of the housing. To facilitate assembly of the battery cell, poles are often mounted on the end cover of the battery cell, allowing the poles to be welded to tabs of the electrode assembly through a current collecting member inside the housing when the end cover covers the housing. This establishes an electrical connection between the poles and the electrode assembly, enabling the poles to serve as output electrodes of the battery cell for the input or output of electrical energy of the battery cell. Finally, the end cover is connected to the housing.

The inventors have discovered that battery cells within a battery are typically inverted inside the box, meaning that a side of the battery cell with a pole faces the bottom of the box. A busbar is placed between the battery cell and the bottom of the box, and the busbar is connected to the pole of the battery cell to achieve series, parallel, or series-parallel connections between multiple battery cells. During later use of the battery of such structure, the battery cell experiences conditions such as shaking or moving, causing the busbar connected to the pole of the battery cell to exert a certain pulling or twisting force on the pole. Since the pole is mounted on the end cover, the force exerted by the busbar on the pole is transferred to the end cover through the pole, causing a certain pulling or twisting action on the end cover. This can lead to the end cover and the housing easily experiencing connection failures such as weld seam cracking due to long-term fatigue stress, thereby significantly reducing the lifespan of the battery cell and creating use safety hazards such as electrolyte leakage in the battery cell, which is not conducive to consumer use.

Based on these considerations, to address the issues of short lifespan and low use safety of battery cells, the inventors, after thorough research, have designed a battery cell that includes a housing, an end cover, an electrode assembly, and a pole. The housing includes integrally formed bottom wall and side wall, where the side wall surrounds the bottom wall. In a first direction, the bottom wall is disposed at one end of the side wall, and the other end of the side wall forms an opening. The end cover covers the opening, with the end cover and the bottom wall disposed opposite each other in the first direction. The electrode assembly is accommodated in the housing, with the bottom wall configured to support the electrode assembly in the first direction. The pole is disposed on the bottom wall and is electrically connected to the electrode assembly.

In the battery cell of such structure, the pole of the battery cell is disposed on the bottom wall of the housing, which is opposite the end cover in the first direction. The bottom wall and the side wall form an integral structure, with the bottom wall supporting the electrode assembly, meaning that the battery cell is inverted. This allows the bottom wall of the battery cell with the pole to face downward and the end cover of the electrode assembly to face upward. Such structure of battery cell can alleviate the phenomenon of the force being transferred to the housing and the end cover through the pole when the busbar of the battery exerts a pulling or twisting force on the pole, thereby mitigating the situation where the end cover and the housing are pulled apart. This effectively reduces the risk of connection failure between the end cover and the housing, enhancing the use safety and lifespan of the battery cell. In addition, since the pole and the end cover are positioned at two ends of the battery cell in the first direction, respectively, with the end cover at the top of the battery cell, this can alleviate the phenomenon of electrolyte leakage in the battery cell when the end cover and the housing experience connection failure or deform, thereby enhancing the use safety of the battery cell.

The battery cell disclosed in the embodiments of this application may be used without limitation in electric apparatuses such as vehicles, ships, or aircraft. Utilizing the battery cell, battery, and the like disclosed in this application to form the power supply system of such electric apparatuses can effectively mitigate issues such as electrolyte leakage in battery cells during use, thereby improving the lifespan and use safety of the battery cells.

An embodiment of this application provides an electric apparatus that uses a battery as a power source. The electric apparatus may be but is not limited to a mobile phone, a tablet, a laptop computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

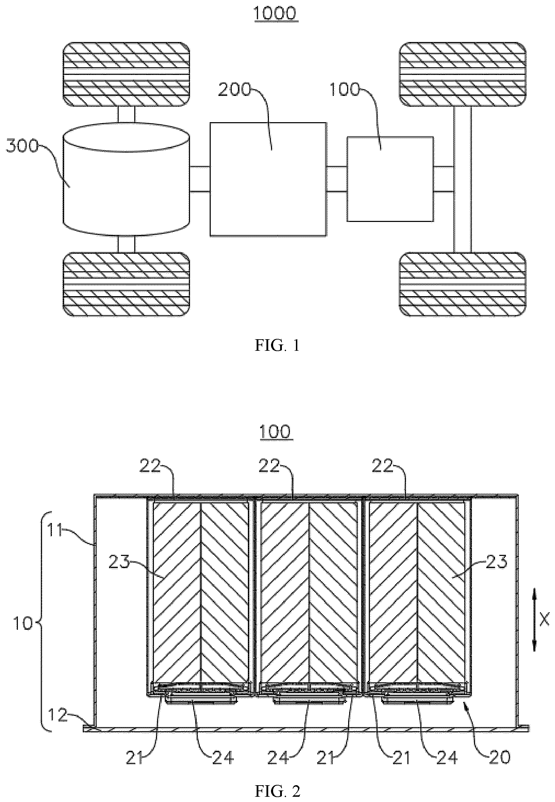

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

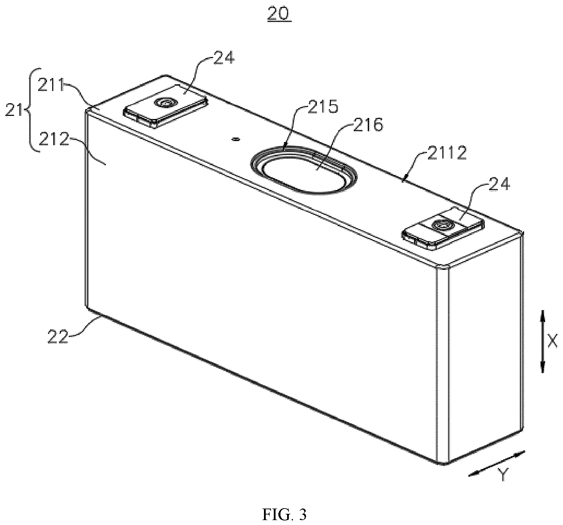

Refer to FIGs. 2 and 3. FIG. 2 is a cross-sectional view of the battery 100 according to some embodiments of this application, and FIG. 3 is a schematic structural diagram of a battery cell 20 according to some embodiments of this application. The battery 100 includes a box 10 and a battery cell 20, where the battery cell 20 is accommodated in the box 10. The box 10 is configured to provide an assembly space for the battery cell 20, and the box 10 may be of various structures. In some embodiments, the box 10 may include a first box body 11 and a second box body 12. The first box body 11 and the second box body 12 fit together, so that the first box body 11 and the second box body 12 jointly define an assembly space for accommodating the battery cell 20. The first box body 11 can be a hollow structure open at one end, and the second box body 12 can be a plate-like structure. The second box body 12 covers the open side of the first box body 11, so that the first box body 11 and the second box body 12 together define an assembly space. Both the first box body 11 and the second box body 12 can alternatively be hollow structures open on one side, with the open side of the first box body 11 engaged with the open side of the second box body 12. Certainly, the box 10 formed by the first box body 11 and the second box body 12 can vary in shape, including but not limited to cylindrical and cuboid forms.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes. For example, in FIG. 3, the battery cell 20 is a cuboid structure.

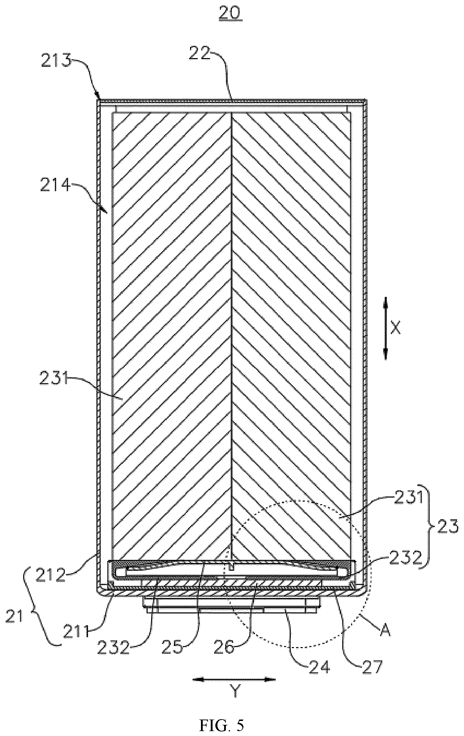

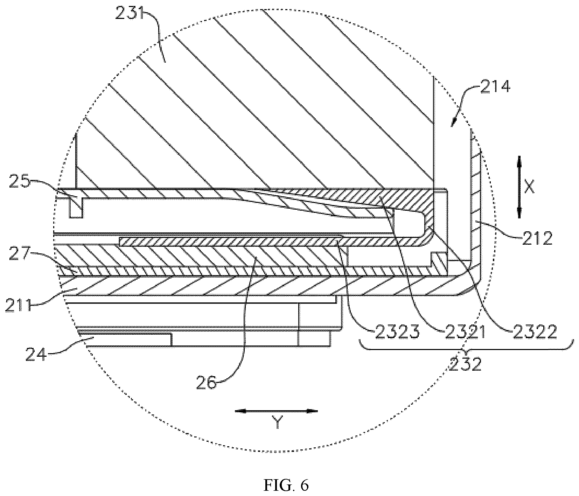

According to some embodiments of this application, referring to FIG. 3 and further referring to FIGs. 4, 5, and 6, FIG. 4 is a structural exploded view of a battery cell 20 according to some embodiments of this application, FIG. 5 is a cross-sectional view of a battery cell 20 according to some embodiments of this application, and FIG. 6 is a locally enlarged view of position A of the battery cell 20 shown in FIG. 5. This application provides a battery cell 20, including a housing 21, an end cover 22, an electrode assembly 23, and a pole 24. The housing 21 includes integrally formed bottom wall 211 and side wall 212, where the side wall 212 surrounds the bottom wall 211. In a first direction X, the bottom wall 211 is disposed at one end of the side wall 212, and the other end of the side wall 212 forms an opening 213. The end cover 22 covers the opening 213, with the end cover 22 and the bottom wall 211 disposed opposite each other in the first direction X. The electrode assembly 23 is accommodated in the housing 21, with the bottom wall 211 configured to support the electrode assembly 23 in the first direction X. The pole 24 is disposed on the bottom wall 211 and is electrically connected to the electrode assembly 23.

The bottom wall 211 and the side wall 212 are integrally formed, meaning that the housing 21 is manufactured using an integral molding process, making the bottom wall 211 and the side wall 212 an integral structure. For example, the housing 21 may be manufactured using stamping, casting, or similar processes.

The housing 21 can also accommodate an electrolyte, such as an electrolyte solution. The housing 21 can have various structural forms. The material of the housing 21 can also vary, such as copper, iron, aluminum, steel, aluminum alloy, and the like.

In a first direction X, the bottom wall 211 is disposed at one end of the side wall 212, and the other end of the side wall 212 forms an opening 213. This means that the interior of the housing 21 forms an accommodation cavity 214 for accommodating the electrode assembly 23, with the accommodation cavity 214 having an opening 213. In other words, the housing 21 is a hollow structure open at one end in the first direction X. The end cover 22 covers the opening 213 of the housing 21 to form a sealed connection, positioning the bottom wall 211 of the housing 21 opposite the end cover 22 in the first direction X. This forms a sealed space for accommodating the electrode assembly 23 and the electrolyte, meaning that the bottom wall 211 serves as a wall of the housing 21 disposed opposite the end cover 22 in the first direction X. That is, the first direction X corresponds to the thickness direction of the end cover 22 and also the thickness direction of the bottom wall 211.

In assembling of the battery cell 20, the electrode assembly 23 may be put into the housing 21 first, the electrolyte is injected into the housing 21, and then the opening 213 of the housing 21 is covered by the end cover 22.

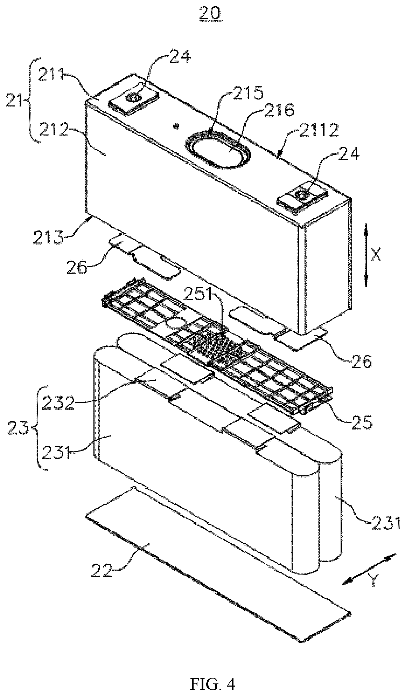

The housing 21 may have various shapes, such as a cylindrical shape and a cuboid shape. The shape of the housing 21 may be determined based on a specific shape of the electrode assembly 23. For example, if the electrode assembly 23 is a cylinder structure, a cylindrical housing 21 may be selected; and if the electrode assembly 23 is a cuboid structure, a cuboid housing 21 may be selected. Certainly, the end cover 22 may be various structures, for example, the end cover 22 is a plate-like structure, a hollow structure with an opening on one end, or the like. For example, in FIGs. 3 and 4, the housing 21 is a cuboid structure, and the end cover 22 is a plate-like structure.

The electrode assembly 23 is accommodated in the housing 21, meaning that the electrode assembly 23 is accommodated in the accommodation cavity 214 enclosed by the bottom wall 211 and the side wall 212. It should be noted that the electrode assembly 23 is a component in which electrochemical reactions occur in the battery cell 20. A body portion 231 of the electrode assembly 23 may include a positive electrode plate, a negative electrode plate, and a separator. The body portion 231 of the electrode assembly 23 may be a winding structure formed by winding the positive electrode plate, the separator, and the negative electrode plate, or may be a laminated structure formed by stacking the positive electrode plate, the separator, and the negative electrode plate.

Optionally, the shell may accommodate one or more electrode assemblies 23. For example, in FIG. 4, there are two electrode assemblies 23 that are stacked in their thickness direction, meaning that the two electrode assemblies 23 are stacked in the thickness direction of the battery cell 20. Certainly, in other embodiments, the shell may accommodate three, four, five, six, or more electrode assemblies 23 that are stacked.

In the first direction X, the bottom wall 211 is configured to support the electrode assembly 23. In other words, as shown in FIG. 2, the battery cell 20 is inverted and placed inside the box 10, allowing the bottom wall 211 to support the electrode assembly 23 in the first direction X. This means one end of the battery cell 20 with the pole 24 is disposed toward the bottom of the box 10 in the first direction X, and the end cover 22 of the battery cell 20 faces the top of the box 10. In practical use, one end of the battery cell 20 with the pole 24 may be disposed toward the ground or downward, making the first direction X the vertical direction.

Optionally, the end cover 22 of the battery cell 20 is connected to the top of the box 10, allowing the battery cell 20 to be inverted and suspended within the box 10. The connection method between the end cover 22 and the box 10 can vary, such as adhesive bonding, snap-fitting, and the like.

The pole 24 is disposed on the bottom wall 211, serving to connect the electrode assembly 23, allowing the pole 24 to input or output the electrical energy of the battery cell 20. The material of the pole 24 can vary, such as copper, iron, aluminum, steel, aluminum alloy, and the like.

For example, in FIG. 3, there are two poles 24, both of which are mounted on the bottom wall 211 of the housing 21. The two poles 24 serve to output or input the positive and negative electrodes of the battery cell 20, respectively. It should be noted that in other embodiments, one pole 24 may be mounted on the bottom wall 211 of the housing 21, and the other pole 24 may be mounted on the side wall 212 of the housing 21.

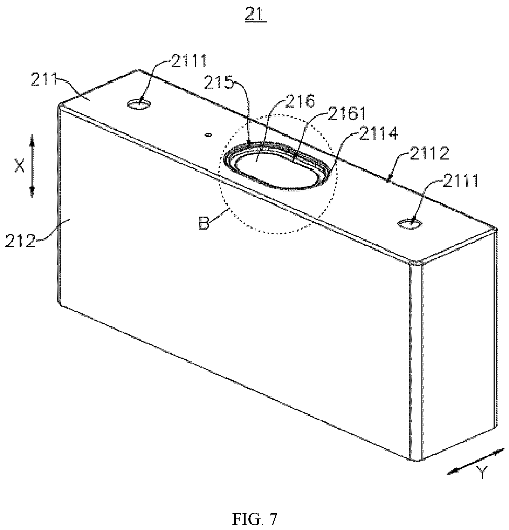

In some embodiments, referring to FIG. 4 and further referring to FIG. 7, FIG. 7 is a schematic structural diagram of the housing 21 of the battery cell 20 according to some embodiments of this application. The bottom wall 211 is provided with two lead-out holes 2111, which are arranged in a one-to-one correspondence with the poles 24. In the first direction X, the lead-out holes 2111 penetrate both sides of the bottom wall 211. The poles 24 are inserted through the lead-out holes 2111 and mounted on the bottom wall 211, allowing the electrical energy of the battery cell 20 to be input or output through the poles 24.

For example, the poles 24 are insulatedly mounted on the bottom wall 211, meaning that the poles 24 do not form an electrical connection with the bottom wall 211.

The poles 24 of the battery cell 20 are positioned on the bottom wall 211 of the housing 21, which is opposite the end cover 22 in the first direction X. The bottom wall 211 and the side wall 212 form an integral structure, with the bottom wall 211 supporting the electrode assembly 23, meaning that the battery cell 20 is inverted. This allows the bottom wall 211 of the battery cell 20 with the poles 24 to face downward and the end cover 22 of the electrode assembly 23 to face upward. The battery cell 20 of such structure can alleviate the phenomenon of the force being transferred to the housing 21 and the end cover 22 through the poles 24 when the busbar of the battery 100 exerts a pulling or twisting force on the poles 24, thereby mitigating the situation where the end cover 22 and the housing 21 are pulled apart. This effectively reduces the risk of connection failure between the end cover 22 and the housing 21, enhancing the use safety and lifespan of the battery cell 20. In addition, since the poles 24 and the end cover 22 are positioned at two ends of the battery cell 20 in the first direction X, respectively, with the end cover 22 at the top of the battery cell 20, this can alleviate the phenomenon of electrolyte leakage in the battery cell 20 when the end cover 22 and the housing 21 experience connection failure or deform, thereby enhancing the use safety of the battery cell 20.

According to some embodiments of this application, as shown in FIGs. 4, 5, and 6, the electrode assembly 23 includes a body portion 231 and tabs 232 protruding from the body portion 231, with the tabs 232 electrically connected to the poles 24. The battery cell 20 further includes a support member 25. In the first direction X, at least a portion of the support member 25 is disposed between the bottom wall 211 and the body portion 231, with the bottom wall 211 supporting the body portion 231 via the support member 25.

The body portion 231 is a component of the electrode assembly 23 where electrochemical reactions occur, and the tabs 232 serve to output or input the electrical energy of the electrode assembly 23. For example, in FIG. 4, the electrode assembly 23 has two tabs 232, serving to output or input the positive and negative electrodes of the electrode assembly 23, respectively, with each tab 232 electrically connected to one of the two poles 24.

At least a portion of the support member 25 is disposed between the bottom wall 211 and the body portion 231, meaning that in the first direction X, the support member 25 may be entirely disposed between the bottom wall 211 and the body portion 231, or partially disposed between the bottom wall 211 and the body portion 231. For example, in FIG. 5, the support member 25 is entirely disposed between the bottom wall 211 and the body portion 231.

The bottom wall 211 supports the body portion 231 via the support member 25, meaning that the support member 25 is disposed between the bottom wall 211 and the body portion 231 in the first direction X, allowing the support provided by the bottom wall 211 to the body portion 231 to be transferred to the body portion 231 through the support member 25. That is, the body portion 231 is placed on the bottom wall 211 through the support member 25.

The support member 25 is made of an insulating material. For example, the material of the support member 25 may be plastic, rubber, silicone, or the like.

The battery cell 20 is provided with a support member 25 disposed between the bottom wall 211 of the housing 21 and the body portion 231 of the electrode assembly 23 in the first direction X. This allows the bottom wall 211 to support the body portion 231 of the electrode assembly 23 via the support member 25. The battery cell 20 of such structure can increase a force-bearing area of the body portion 231 of the electrode assembly 23, thereby helping to alleviate the phenomenon of too large local stress in the body portion 231 of the electrode assembly 23 due to localized force. This can effectively reduce the risk of damage to the body portion 231 of the electrode assembly 23 during use, thereby improving the lifespan of the electrode assembly 23.

According to some embodiments of this application, as shown in FIGs. 5 and 6, in the first direction X, the tab 232 protrudes from an end of the body portion 231 facing the bottom wall 211, and the tab 232 is bent around the support member 25.

The tab 232 protrudes from an end of the body portion 231 facing the bottom wall 211, meaning that the tab 232 is connected to the end of the body portion 231 that is close to the bottom wall 211 in the first direction X.

The tab 232 is bent around the support member 25, meaning that in the first direction X, the tab 232 is bent around the support member 25 from a side of the support member 25 facing the body portion 231 and then is connected to the pole 24 on a side of the support member 25 facing away from the body portion 231.

The tab 232 is connected to the end of the body portion 231 facing the bottom wall 211 in the first direction X, and the tab 232 is bent around the support member 25 and then electrically connected to the pole 24, so that a part of the tab 232 connected to the pole 24 is located on the side of the support member 25 facing away from the body portion 231. This can effectively alleviate the phenomenon where the tab 232 is inserted backward into the body portion 231 of the electrode assembly 23 during assembly or use, thereby helping to reduce the risk of short circuits in the battery cell 20 and enhancing the use safety of the battery cell 20.

In some embodiments, as further shown in FIGs. 5 and 6, the tab 232 includes a first connection segment 2321, a second connection segment 2322, and a third connection segment 2323 connected in sequence. The first connection segment 2321 is connected to the body portion 231, and the third connection segment 2323 is connected to the pole 24. In the first direction X, the first connection segment 2321 is located on a side of the support member 25 facing the body portion 231, and the third connection segment 2323 is located on a side of the support member 25 facing the bottom wall 211. In the second direction Y, the second connection segment 2322 is located at one end of the support member 25, with the second direction Y being perpendicular to the first direction X.

For example, the third connection segment 2323 of the tab 232 abuts against the side of the support member 25 facing the bottom wall 211, facilitating the connection between the third connection segment 2323 and the pole 24.

It should be noted that the second direction Y is perpendicular to the first direction X, meaning that the second direction Y is a direction perpendicular to a thickness direction of the bottom wall 211. The second direction Y may be a length direction or width direction of the support member 25. For example, in FIGs. 5 and 6, the second direction Y is a width direction of the support member 25, which is the same as a thickness direction of the body portion 231 of the electrode assembly 23.

The tab 232 has a first connection segment 2321, a second connection segment 2322, and a third connection segment 2323 connected in sequence, with the first connection segment 2321 and the third connection segment 2323 located on two sides of the support member 25, respectively, and the second connection segment 2322 located at one end of the support member 25 in the second direction Y. The first connection segment 2321 and the third connection segment 2323 are respectively connected to the body portion 231 and the pole 24, achieving a structure where the tab 232 is bent around the support member 25. This allows the tab 232 to form the third connection segment 2323 that is located on the side of the support member 25 facing the bottom wall 211 in the first direction X and that is configured to be connected to the pole 24.

According to some embodiments of this application, as shown in FIGs. 4, 5, and 6, the battery cell 20 includes two electrode assemblies 23. In the second direction Y, the body portions 231 of the two electrode assemblies 23 are stacked in the second direction Y, and the tabs 232 of the two electrode assemblies 23 are bent around the two ends of the support member 25, respectively, with the second direction Y being perpendicular to the first direction X.

The body portions 231 of the two electrode assemblies 23 are stacked in the second direction Y, meaning that the body portions 231 of the two electrode assemblies 23 are stacked in the thickness direction of the body portion 231.

The tabs 232 of the two electrode assemblies 23 are bent around the two ends of the support member 25, respectively, meaning that the tabs 232 of the two electrode assemblies 23 are respectively bent from the two ends of the support member 25 in the second direction Y to the side of the support member 25 facing the bottom wall 211. That is, the second connection segments 2322 of the tabs 232 of the two electrode assemblies 23 are located at the two ends of the support member 25 in the second direction Y, respectively, allowing the second connection segments 2322 of the tabs 232 of the two electrode assemblies 23 to face each other in the second direction Y.

The battery cell 20 is provided with two electrode assemblies 23 stacked in the second direction Y, and the tabs 232 of the two electrode assemblies 23 are bent around the two ends of the support member 25 in the second direction Y, respectively. This achieves a structure where the tabs 232 of the two electrode assemblies 23 are both bent around the support member 25 and then are connected to the pole 24. This can alleviate the phenomenon where the tabs 232 of the two electrode assemblies 23 are inserted backward into the body portion 231 of the electrode assembly 23 during assembly or use, thereby helping to further reduce the safety hazards of the battery cell 20 during use.

According to some embodiments of this application, as shown in FIGs. 4, 5, and 6, the battery cell 20 further includes a current collecting member 26. In the first direction X, at least a portion of the current collecting member 26 is disposed between the support member 25 and the bottom wall 211, with the current collecting member 26 connecting the tab 232 and the pole 24.

At least a portion of the current collecting member 26 is disposed between the support member 25 and the bottom wall 211, meaning that in the first direction X, the current collecting member 26 may be entirely disposed between the bottom wall 211 and the support member 25, or partially disposed between the bottom wall 211 and the support member 25. For example, in FIG. 5, the current collecting member 26 is entirely disposed between the bottom wall 211 and the support member 25.

The current collecting member 26 serves to connect the third connection segment 2323 of the tab 232 and the pole 24, achieving an electrical connection between the tab 232 and the pole 24. The material of the current collecting member 26 can vary, such as copper, iron, aluminum, steel, aluminum alloy, and the like.

For example, there are two current collecting members 26, which are arranged in a one-to-one correspondence with the poles 24. That is, the third connection segment 2323 of one tab 232 of the electrode assembly 23 is connected to one pole 24 through one current collecting member 26, and the third connection segment 2323 of the other tab 232 of the electrode assembly 23 is connected to the other pole 24 through the other current collecting member 26.

The battery cell 20 is also provided with a current collecting member 26 disposed between the support member 25 and the bottom wall 211 in the first direction X. This allows the current collecting member 26 to connect the tab 232 and the pole 24, achieving an electrical connection between the tab 232 and the pole 24. Such structure is beneficial for reducing the difficulty of connecting the tab 232 and the pole 24, thereby improving the production efficiency of the battery cell 20.

According to some embodiments of this application, as shown in FIGs. 5 and 6, the battery cell 20 further includes a first insulating member 27. In the first direction X, at least a portion of the first insulating member 27 is disposed between the current collecting member 26 and the bottom wall 211, to insulate and isolate the current collecting member 26 from the bottom wall 211.

At least a portion of the first insulating member 27 is disposed between the current collecting member 26 and the bottom wall 211, meaning that in the first direction X, the first insulating member 27 may be entirely disposed between the bottom wall 211 and the current collecting member 26, or partially disposed between the bottom wall 211 and the current collecting member 26. For example, in FIGs. 5 and 6, the first insulating member 27 is partially disposed between the bottom wall 211 and the current collecting member 26.

The first insulating member 27 serves to insulate and isolate the current collecting member 26 from the bottom wall 211, reducing the risk of short circuits. The material of the first insulating member 27 can vary, such as rubber, silicone, plastic, and the like.

The battery cell 20 is also provided with a first insulating member 27 disposed between the current collecting member 26 and the bottom wall 211 in the first direction X. The first insulating member 27 can insulate and isolate the current collecting member 26 from the bottom wall 211, reducing the risk of a short circuit between the current collecting member 26 and the bottom wall 211. This helps to enhance the safety of the battery cell 20 during use, reducing the risk associated with the use of the battery cell 20.

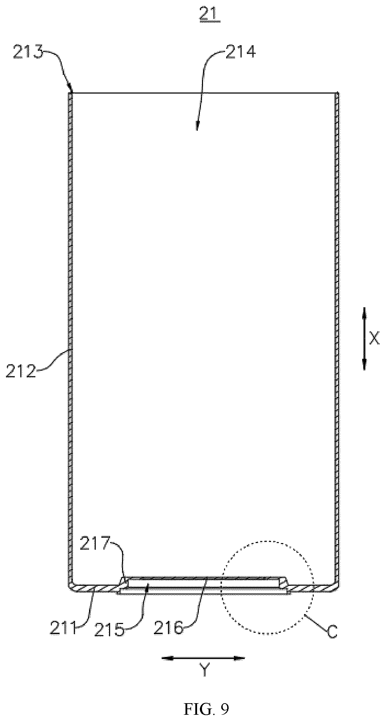

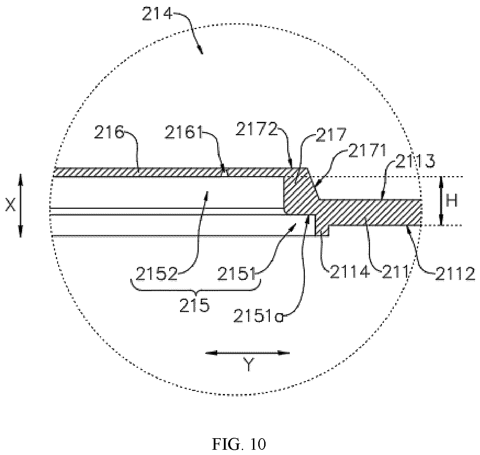

According to some embodiments of this application, referring to FIG. 7 and further referring to FIGs. 8, 9, and 10, FIG. 8 is a locally enlarged view of position B of the housing 21 shown in FIG. 7, FIG. 9 is a cross-sectional view of the housing 21 of the battery cell 20 according to some embodiments of this application, and FIG. 10 is a locally enlarged view of position C of the housing 21 shown in FIG. 9. In the first direction X, the bottom wall 211 has a first surface 2112 facing away from the electrode assembly 23, with the first surface 2112 provided with a groove 215. The bottom wall 211 of the groove 215 forms a pressure relief portion 216, where the pressure relief portion 216 is configured to release the internal pressure of the battery cell 20.

The first surface 2112 is provided with the groove 215, and the bottom wall 211 of the groove 215 forms the pressure relief portion 216. In the first direction X, the first surface 2112 of the bottom wall 211 is recessed toward the electrode assembly 23, forming the groove 215, with the bottom wall 211 of the groove 215 forming the pressure relief portion 216 configured to release the internal pressure of the battery cell 20. That is, the bottom wall 211 of the groove 215 can rupture during thermal runaway of the battery cell 20, releasing the internal pressure of the battery cell 20.

For example, in FIG. 10, the pressure relief portion 216 is provided with a notch groove 2161, creating a weaker structure in the region with the notch groove 2161. This allows the pressure relief portion 216 to rupture along the notch groove 2161 during thermal runaway of the battery cell 20, releasing the internal pressure of the battery cell 20. Certainly, the structure of the pressure relief portion 216 is not limited to this. In other embodiments, the pressure relief portion 216 may alternatively have a structure with locally reduced thickness, creating a weaker structure in the region with reduced thickness. This allows the pressure relief portion 216 to rupture along the region with reduced thickness during thermal runaway of the battery cell 20, releasing the internal pressure of the battery cell 20.

It should be noted that the pressure relief portion 216 and the bottom wall 211 may be an integral structure or separate structures. If the pressure relief portion 216 and the bottom wall 211 are an integral structure, they can be manufactured using processes such as stamping or extrusion molding. If the pressure relief portion 216 and the bottom wall 211 are separate structures, a mounting hole penetrating the bottom wall 211 in the first direction X can first be disposed on the bottom wall 211, and then the pressure relief portion 216 can be welded to the bottom wall 211 and the mounting hole is sealed.

In some embodiments, as shown in FIG. 4, in the embodiments of the battery cell 20 provided with the support member 25, the support member 25 is provided with multiple through holes 251 in the first direction X at positions corresponding to the pressure relief portion 216. The through holes 251 penetrate both sides of the support member 25 in the first direction X. Such structure of the support member 25 can reduce the impact of the support member 25 on the pressure relief portion 216 when the pressure of the battery cell 20 is released through the pressure relief portion 216, ensuring that the pressure of the battery cell 20 can be released normally.

The groove 215 recessed toward the interior of the battery cell 20 is provided on the first surface 2112 of the bottom wall 211, and the bottom wall 211 of the groove 215 forms the pressure relief portion 216 configured to release the internal pressure of the battery cell 20, so as to release the internal pressure of the battery cell 20 during thermal runaway of the battery cell 20. Such structure allows the pressure relief portion 216 to be spaced apart from the first surface 2112 of the bottom wall 211 and closer to the electrode assembly 23 compared to the first surface 2112. This can provide a certain level of protection to the pressure relief portion 216, reducing the risk of the pressure relief portion 216 being worn or damaged by external environments, thereby reducing the phenomenon of premature valve opening of the pressure relief portion 216. In addition, it can alleviate the phenomenon where the pressure relief pressure required by the pressure relief portion 216 increases due to the pressure relief portion 216 being covered by other components, to ensure the normal use of the pressure relief portion 216, thereby helping to reduce the safety hazards of the battery cell 20 during use.

In some embodiments, as shown in FIG. 10, in the first direction X, a distance between the pressure relief portion 216 and the first surface 2112 is H, satisfying 1 mm ≤ H ≤ 5 mm.

The distance between the pressure relief portion 216 and the first surface 2112 in the first direction X is set to be between 1 mm and 5 mm. This can alleviate the phenomenon of poor protection of the pressure relief portion 216 and easy coverage by other components caused by an excessively small distance between the pressure relief portion 216 and the first surface 2112, ensuring the normal use of the pressure relief portion 216. In addition, this can alleviate the phenomenon of excessive space occupation and increased difficulty in processing caused by an excessively large distance between the pressure relief portion 216 and the first surface 2112.

According to some embodiments of this application, as shown in FIGs. 9 and 10, in the first direction X, the bottom wall 211 has a second surface 2113 facing the electrode assembly 23. The bottom wall 211 forms a protrusion 217 at a position corresponding to the groove 215, with the protrusion 217 protruding from the second surface 2113.

In the first direction X, the bottom wall 211 has the second surface 2113 facing the electrode assembly 23, meaning that the bottom wall 211 has a second surface 2113 opposite the first surface 2112 in the first direction X. That is, the first surface 2112 is the outer surface of the bottom wall 211 facing away from the interior of the battery cell 20, and the second surface 2113 is the inner surface of the bottom wall 211 facing the interior of the battery cell 20.

The protrusion 217 is formed at a position of the bottom wall 211 corresponding to the groove 215, with the protrusion 217 protruding from the second surface 2113. This means that the region of the bottom wall 211 with the groove 215 protrudes toward the interior of the battery cell 20 to form the protrusion 217, and the protrusion 217 extends beyond the second surface 2113 along the first direction X, allowing the pressure relief portion 216 to be connected to the bottom wall 211 through the protrusion 217.

The protrusion 217 protruding from the second surface 2113 is formed at a position of the bottom wall 211 corresponding to the groove 215, so that the pressure relief portion 216 protrudes from the second surface 2113 toward the electrode assembly 23. Such structure facilitates the processing of the groove 215 on the bottom wall 211 that is recessed toward the electrode assembly 23. In addition, it can enhance the structural strength between the pressure relief portion 216 and the bottom wall 211.

According to some embodiments of this application, as further shown in FIGs. 9 and 10, the groove 215 includes a first groove 2151 and a second groove 2152 continuously arranged in the first direction X. The first groove 2151 is disposed on the first surface 2112, and a side surface of the first groove 2151 is connected to a side surface of the second groove 2152 via a bottom surface 2151a of the first groove.

The groove 215 includes the first groove 2151 and the second groove 2152 continuously arranged in the first direction X, meaning that the groove 215 includes at least two continuously arranged groove segments, namely the first groove 2151 and the second groove 2152, and the first groove 2151 and the second groove 2152 are arranged in the first direction X.

The first groove 2151 is disposed on the first surface 2112, meaning that a side wall 212 of the first groove 2151 is connected to the first surface 2112.

The side surface of the first groove 2151 is connected to the side surface of the second groove 2152 via the bottom surface 2151a of the first groove, meaning that the second groove 2152 is disposed on the bottom surface 2151a of the first groove, connecting the side surface of the second groove 2152 to the bottom surface 2151a of the first groove.

The groove 215 is provided with the first groove 2151 and the second groove 2152 continuously arranged in the first direction X toward the electrode assembly 23, with the side surface of the first groove 2151 connected to the side surface of the second groove 2152 via the bottom surface 2151a of the first groove. This means the second groove 2152 is disposed on the bottom surface 2151a of the first groove, creating a stepped structure between the pressure relief portion 216 and the bottom wall 211. This is beneficial for further enhancing the structural strength between the pressure relief portion 216 and the bottom wall 211.

According to some embodiments of this application, as shown in FIG. 10, an outer peripheral surface 2171 of the protrusion is disposed at an obtuse angle with respect to the second surface 2113. In the first direction X, the protrusion 217 has a third surface 2172 facing the electrode assembly 23, and a projection of an edge of the third surface 2172 in the first direction X is located within the bottom surface 2151a of the first groove.

The outer peripheral surface 2171 of the protrusion is the surface around the circumference of the protrusion 217, that is, the outer peripheral surface 2171 of the protrusion surrounds the protrusion 217, and the outer peripheral surface 2171 of the protrusion is connected between the second surface 2113 and the third surface 2172.

The outer peripheral surface 2171 of the protrusion is disposed at an obtuse angle with respect to the second surface 2113, meaning that the outer peripheral surface 2171 of the protrusion is inclined, making an end of the outer peripheral surface 2171 of the protrusion connected to the second surface 2113 further away from the pressure relief portion 216 in a radial direction of the pressure relief portion 216 than an end of the outer peripheral surface 2171 of the protrusion connected to the third surface 2172. This results in a structure where the second surface 2113 and the third surface 2172 are spaced apart in the radial direction of the pressure relief portion 216, allowing the outer peripheral surface 2171 of the protrusion to be disposed at an obtuse angle with respect to the second surface 2113 after connection through the outer peripheral surface 2171 of the protrusion. It should be noted that the radial direction of the pressure relief portion 216 is perpendicular to the first direction X, and the radial direction of the pressure relief portion 216 is a direction from an edge of the pressure relief portion 216 toward a center of the pressure relief portion 216 or from the center of the pressure relief portion 216 toward the edge of the pressure relief portion 216.

The projection of the edge of the third surface 2172 in the first direction X is located within the bottom surface 2151a of the first groove, meaning that a projection of an intersection of the third surface 2172 and the outer peripheral surface 2171 of the protrusion in the first direction X is located within the bottom surface 2151a of the first groove. That is, as the distance from the pressure relief portion 216 increases radially, the distance between the outer peripheral surface 2171 of the protrusion and the bottom surface 2151a of the first groove gradually decreases in the first direction X, creating a gradually decreased thickness of the protrusion 217 in the first direction X.

The outer peripheral surface 2171 of the protrusion is disposed at an obtuse angle with respect to the second surface 2113 and the projection of the edge of the third surface 2172 of the protrusion 217 facing the electrode assembly 23 in the first direction X is located within the bottom surface 2151a of the first groove, so that the distance between the outer peripheral surface 2171 of the protrusion and the bottom surface 2151a of the first groove in the first direction X gradually decreases from the edge of the third surface 2172 to the second surface 2113, resulting in the thickness of the protrusion 217 gradually decreasing in the first direction X. Therefore, a region with strong strength and regions where the strength gradually decreases are formed on the protrusion 217. This achieves a structure where a region of the pressure relief portion 216 connected to the bottom wall 211 transitions from strong to weak in strength, allowing the region with decreased strength to absorb the stress and energy transferred from the bottom wall 211 while ensuring the structural strength of the pressure relief portion 216 connected to the bottom wall 211, to reduce the impact of the stress and energy of the bottom wall 211 on the pressure relief portion 216. This, in turn, reduces the risk of deformation of the pressure relief portion 216 during use due to the influence of the bottom wall 211.

According to some embodiments of this application, as further shown in FIG. 10, a bottom wall 211 of the second groove 2152 forms the pressure relief portion 216.

The bottom wall 211 of the second groove 2152 forms the pressure relief portion 216, meaning that the groove 215 is provided with only the first groove 2151 and the second groove 2152 continuously arranged in the first direction X, with the first groove 2151 disposed on the first surface 2112 and the bottom wall 211 of the second groove 2152 serving as the pressure relief portion 216. Certainly, in other embodiments, the groove 215 may also include the first groove 2151, the second groove 2152, a third groove, a fourth groove, and the like, continuously arranged in the first direction X.

With the bottom wall 211 of the second groove 2152 disposed as the pressure relief portion 216 to release the internal pressure of the battery cell 20, the groove 215 is simplified to only include the first groove 2151 and the second groove 2152. Such structure facilitates the processing of the bottom wall 211, reducing the difficulty in processing.

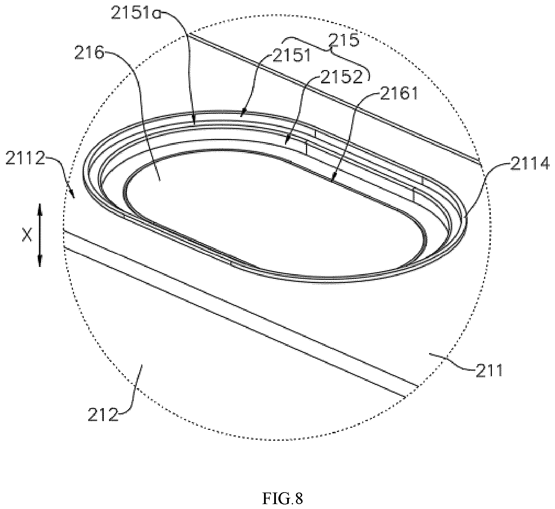

According to some embodiments of this application, as shown in FIGs. 8, 9, and 10, the first surface 2112 is provided with a protruding blocking portion 2114, where the blocking portion 2114 surrounds an outer side of the groove 215.

The blocking portion 2114 surrounds the outer side of the groove 215, meaning that the blocking portion 2114 is an annular structure surrounding the outer side of the groove 215, allowing the blocking portion 2114 to be arranged around the groove 215.

With the blocking portion 2114 protruding from the first surface 2112 and surrounding the outer side of the groove 215, the battery cell 20 of such structure can block the electrolyte through the blocking portion 2114 during assembly of the battery cell 20, reducing the phenomenon of the electrolyte flowing into the groove 215 from the first surface 2112. This, in turn, reduces the impact of the electrolyte on the pressure relief portion 216.

According to some embodiments of this application, as shown in FIG. 5, thickness of the bottom wall 211 is greater than thickness of the side wall 212. That is, the thickness of the bottom wall 211 in the first direction X is greater than the thickness of the side wall 212 in the second direction Y.

With the thickness of the bottom wall 211 set to be greater than the thickness of the side wall 212, the structural strength of the bottom wall 211 is enhanced, thereby ensuring the structural stability of the poles 24 mounted on the bottom wall 211 and improving the load-bearing capacity of the bottom wall 211 for the electrode assembly 23. This alleviates the phenomenon of deformation of the bottom wall 211 during use.

Certainly, the structure of the battery cell 20 is not limited to this. In some embodiments, the thickness of the bottom wall 211 may alternatively be set to be equal to the thickness of the side wall 212. That is, the thickness of the bottom wall 211 in the first direction X is equal to the thickness of the side wall 212 in the second direction Y.

With the thickness of the bottom wall 211 set to be equal to the thickness of the side wall 212, the integral structure of the bottom wall 211 and side wall 212 can be directly formed through processes such as stamping, without the need for additional processing techniques. This reduces the manufacturing difficulty of the housing 21.

According to some embodiments of this application, as further shown in FIG. 5, thickness of the side wall 212 is greater than thickness of the end cover 22. That is, the thickness of the side wall 212 in the second direction Y is greater than the thickness of the end cover 22 in the first direction X.

Setting the thickness of the side wall 212 to be greater than the thickness of the end cover 22 is beneficial to reducing space occupied by the end cover 22 since the end cover 22 does not have components such as poles 24 mounted on it, thereby increasing the energy density and capacity of the battery cell 20.

According to some embodiments of this application, as shown in FIGs. 3 and 4, the battery cell 20 includes two poles 24 with opposite polarities, the two poles 24 are both disposed on the bottom wall 211, and the two poles 24 are both electrically connected to the electrode assembly 23.

The two poles 24 are both insulatedly mounted on the bottom wall 211, meaning that neither of the two poles 24 forms an electrical connection with the bottom wall 211.

The two poles 24 are both electrically connected to the electrode assembly 23, meaning that the two poles 24 are respectively connected to two tabs 232 of the electrode assembly 23 with opposite polarities.

The battery cell 20 is provided with the two poles 24, and the two poles 24 are both disposed on the bottom wall 211 of the housing 21. This can reduce the phenomenon of the force being transferred to the housing 21 and the end cover 22 through the poles 24 when the busbar of the battery 100 exerts a pulling or twisting force on the two poles 24 with opposite polarities, thereby mitigating the situation where the end cover 22 and the housing 21 are pulled apart, further reducing the risk of connection failure between the end cover 22 and the housing 21. In addition, this can further alleviate the phenomenon of electrolyte leakage in the battery cell 20 when the end cover 22 and the housing 21 experience connection failure or deform.

According to some embodiments of this application, as shown in FIG. 2, this application further provides a battery 100, including a box 10 and the battery cell 20 in any one of the foregoing solutions. The battery cell 20 is accommodated in the box 10, with the bottom wall 211 disposed facing the bottom of the box 10 in the first direction X.

In the first direction X, the bottom wall 211 faces the bottom of the box 10, meaning that one end of the battery cell 20 with the pole 24 is closer to the bottom of the box 10 in the first direction X compared to the end cover 22. That is, one end of the battery cell 20 with the pole 24 is disposed downward.

Optionally, one or more battery cells 20 may be disposed within the box 10. For example, in FIG. 2, there are multiple battery cells 20.

In some embodiments, as further shown in FIG. 2, in the first direction X, the end cover 22 is connected to the top of the box 10, allowing the battery cell 20 to be suspended within the box 10.

The end cover 22 is connected to the top of the box 10, allowing the battery cell 20 to be suspended within the box 10. That is, the battery cell 20 has one end with the end cover 22 in the first direction X connected to the top of the box 10, thereby spacing one end of the battery cell 20 with the pole 24 in the first direction X from the bottom of the box 10 and suspending the battery cell 20 within the box 10.

For example, the method of connecting the end cover 22 to the top of the box 10 can vary, such as adhesive bonding, snap-fitting, and the like.

The end cover 22 of the battery cell 20 is disposed facing the top of the box 10, the bottom wall 211 of the housing 21 is disposed facing the bottom of the box 10, and the end cover 22 of the battery cell 20 is connected to the top of the box 10, so that the battery cell 20 is suspended within the box 10. Such structure allows the bottom wall 211 with the pole 24 to be spaced apart from the bottom of the box 10, facilitating the mounting of the busbar and other components connected to the pole 24 within the box 10. In addition, this reduces the impact of other components on the end cover 22, reducing the phenomenon of deformation of the end cover 22 leading to connection failure between the end cover 22 and the housing 21, thereby helping to reduce the risk of electrolyte leakage in the battery cell 20.

According to some embodiments of this application, this application further provides an electric apparatus including the battery 100 in any one of the foregoing solutions. The battery 100 is configured to supply electrical energy to the electric apparatus.

The electric apparatus may be any one of the foregoing devices or systems that use the battery 100.

According to some embodiments of this application, as shown in FIGs. 2 to 10, this application provides a battery cell 20. The battery cell 20 includes a housing 21, an end cover 22, an electrode assembly 23, a pole 24, a support member 25, a current collecting member 26, and a first insulating member 27. The housing 21 includes integrally formed bottom wall 211 and side wall 212, where the side wall 212 surrounds the bottom wall 211. In a first direction X, the bottom wall 211 is disposed at one end of the side wall 212, and the other end of the side wall 212 forms an opening 213. The pole 24 is insulatedly mounted on the bottom wall 211. The end cover 22 covers the opening 213, with the end cover 22 and the bottom wall 211 disposed opposite each other in the first direction X. The electrode assembly 23 is accommodated in the housing 21, including a body portion 231 and tabs 232. In the first direction X, the tabs 232 protrude from an end of the body portion 231 facing the bottom wall 211 and are configured to be connected to the pole 24. In the first direction X, at least a portion of the support member 25 is disposed between the bottom wall 211 and the body portion 231, with the bottom wall 211 supporting the body portion 231 via the support member 25. The tabs 232 are bent around the support member 25, including a first connection segment 2321, a second connection segment 2322, and a third connection segment 2323 connected in sequence. The first connection segment 2321 is connected to the body portion 231, and the third connection segment 2323 is connected to the pole 24. In the first direction X, the first connection segment 2321 is located on a side of the support member 25 facing the body portion 231, and the third connection segment 2323 is located on a side of the support member 25 facing the bottom wall 211. In the second direction Y, the second connection segment 2322 is located at one end of the support member 25, with the second direction Y being perpendicular to the first direction X. In the first direction X, at least a portion of the current collecting member 26 is disposed between the support member 25 and the bottom wall 211, with the current collecting member 26 connecting the third connection segment 2323 and the pole 24. In the first direction X, at least a portion of the first insulating member 27 is disposed between the current collecting member 26 and the bottom wall 211, to insulate and isolate the current collecting member 26 from the bottom wall 211.

In the first direction X, the bottom wall 211 has a first surface 2112 facing away from the electrode assembly 23, with the first surface 2112 provided with a groove 215. The bottom wall 211 also has a second surface 2113 facing the electrode assembly 23, where the bottom wall 211 forms a protrusion 217 at a position corresponding to the groove 215, and the protrusion 217 protrudes from the second surface 2113. The groove 215 includes a first groove 2151 and a second groove 2152 continuously arranged in the first direction X. The first groove 2151 is disposed on the first surface 2112, and a side surface of the first groove 2151 is connected to a side surface of the second groove 2152 via a bottom surface 2151a of the first groove. A bottom wall 211 of the second groove 2152 forms a pressure relief portion 216, where the pressure relief portion 216 is configured to release the internal pressure of the battery cell 20. An outer peripheral surface 2171 of the protrusion is disposed at an obtuse angle with respect to the second surface 2113, with the protrusion 217 having a third surface 2172 facing the electrode assembly 23 in the first direction X, and a projection of an edge of the third surface 2172 in the first direction X being located within the bottom surface 2151a of the first groove.

It should be noted that, in the absence of conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising:
a housing, comprising integrally formed bottom wall and side wall, wherein the side wall surrounds the bottom wall, and in a first direction, the bottom wall is disposed at one end of the side wall, and the other end of the side wall forms an opening;
an end cover, covering the opening, wherein the end cover is disposed opposite the bottom wall in the first direction;
an electrode assembly, accommodated in the housing, wherein in the first direction, the bottom wall is configured to support the electrode assembly; and
a pole, disposed on the bottom wall, wherein the pole is electrically connected to the electrode assembly.

2. The battery cell according to claim 1, wherein:
the electrode assembly comprises a body portion and a tab protruding from the body portion, the tab being electrically connected to the pole; and
the battery cell further comprises a support member, in the first direction, at least a portion of the support member is disposed between the bottom wall and the body portion, and the bottom wall supports the body portion via the support member.

3. The battery cell according to claim 2, wherein in the first direction, the tab protrudes from an end of the body portion facing the bottom wall, and the tab is bent around the support member.

4. The battery cell according to claim 3, wherein:
the tab comprises a first connection segment, a second connection segment, and a third connection segment connected in sequence, the first connection segment being connected to the body portion, and the third connection segment being connected to the pole;
in the first direction, the first connection segment is located on a side of the support member facing the body portion, and the third connection segment is located on a side of the support member facing the bottom wall; and
in a second direction, the second connection segment is located at one end of the support member, the second direction being perpendicular to the first direction.

5. The battery cell according to claim 3 or 4, wherein the battery cell comprises:
two electrode assemblies,
wherein in a second direction, body portions of the two electrode assemblies are stacked in the second direction, and tabs of the two electrode assemblies are bent around two ends of the support member, respectively, the second direction being perpendicular to the first direction.

6. The battery cell according to any one of claims 3 to 5, wherein the battery cell further comprises:
a current collecting member,
wherein in the first direction, at least a portion of the current collecting member is disposed between the support member and the bottom wall, and the current collecting member is configured to connect the tab and the pole.

7. The battery cell according to claim 6, wherein the battery cell further comprises:
a first insulating member,
wherein in the first direction, at least a portion of the first insulating member is disposed between the current collecting member and the bottom wall, to insulate and isolate the current collecting member from the bottom wall.

8. The battery cell according to any one of claims 1 to 7, wherein in the first direction, the bottom wall has a first surface facing away from the electrode assembly, and
wherein the first surface is provided with a groove, a bottom wall of the groove forms a pressure relief portion, and the pressure relief portion is configured to release internal pressure of the battery cell.

9. The battery cell according to claim 8, wherein in the first direction, a distance between the pressure relief portion and the first surface is H, satisfying 1 mm ≤ H ≤ 5 mm.

10. The battery cell according to claim 8 or 9, wherein in the first direction, the bottom wall has a second surface facing the electrode assembly, the bottom wall forming a protrusion at a position corresponding to the groove, and the protrusion protruding from the second surface.

11. The battery cell according to claim 10, wherein the groove comprises a first groove and a second groove disposed continuously in the first direction, the first groove being disposed on the first surface, and a side surface of the first groove being connected to a side surface of the second groove via a bottom surface of the first groove.

12. The battery cell according to claim 11, wherein an outer peripheral surface of the protrusion is disposed at an obtuse angle with respect to the second surface, and in the first direction, the protrusion has a third surface facing the electrode assembly, a projection of an edge of the third surface in the first direction being located within the bottom surface of the first groove.

13. The battery cell according to claim 11 or 12, wherein a bottom wall of the second groove forms the pressure relief portion.

14. The battery cell according to any one of claims 8 to 13, wherein the first surface is provided with a protruding blocking portion, the blocking portion surrounding an outer side of the groove.

15. The battery cell according to any one of claims 1 to 14, wherein thickness of the bottom wall is greater than thickness of the side wall.

16. The battery cell according to any one of claims 1 to 14, wherein thickness of the bottom wall is equal to thickness of the side wall.

17. The battery cell according to any one of claims 1 to 16, wherein thickness of the side wall is greater than thickness of the end cover.

18. The battery cell according to any one of claims 1 to 17, wherein the battery cell comprises two poles with opposite polarities, the two poles being both disposed on the bottom wall, and the two poles being both electrically connected to the electrode assembly.

19. A battery, comprising:
a box; and
the battery cell according to any one of claims 1 to 18, wherein the battery cell is accommodated in the box, and in the first direction, the bottom wall is disposed facing the bottom of the box.

20. The battery according to claim 19, wherein in the first direction, the end cover is connected to the top of the box, so that the battery cell is suspended in the box.

21. An electric apparatus, comprising the battery according to claim 19 or 20.
